# EUROPEAN PATENT APPLICATION

(11) **EP 4 831 994 A1**
(43) Date of publication of application: **28.10.2026**
(21) Application number: 25461542.0
(22) Date of filing: 27.10.2025
(51) Int. Cl.: G11B 7/003, G11B 7/24009, G11B 7/0045, G11B 7/241, G11B 7/24044

(54) **A METHOD OF RECORDING DATA ON AN OPTICAL DATA CARRIER AND AN OPTICAL DATA CARRIER**

(30) Priority: 24.04.2025 WO PCT/IB2025/054291
(71) Applicant: TACHYOTEC SPOLKA Z OGRANICZONA ODPOWIEDZIALNOSCIA, 05-825 Krasnicza Wola (PL)
(72) Inventor: SZOSTKIEWICZ, Lukasz, 05-825 Krasnicza Wola (PL); STRAGOWSKI, Marcin, 03-982 Warszawa (PL); NAPIERALA, Marek, 01-476 Warszawa (PL); TENDERENDA, Tadeusz, 02-796 Warszawa (PL)
(74) Representative: Bury & Bury

(57) **Abstract**

A method of recording data on an optical data carrier in the form of a rewindable tape containing a recordable layer, comprising a step of applying data symbols to the recordable layer by creating voxels with a locally changed refractive index by subjecting the recordable layer to the impact of electromagnetic radiation pulses from a pulsed focused source of radiation directed to the tape being rewound. The step of applying comprises focusing radiation within the volume of the recordable layer of the tape **(100, 600, 800, 900, 1000),** in voxels **(110),** located entirely below the surface of the recordable layer, having a size less than or equal to 1 µm.

An optical data carrier according to the invention has a form of a tape **(100, 600, 800, 900,1000)** having a recordable layer made of a material containing glass. The recordable layer also is a substrate layer. The tape and has thickness **(H)** ranging from 1 µm to 20 µm, width **(W)** ranging from 7 mm to 18 mm and length **(L)** of at least 100 m

## Description

### Field of the invention

The invention concerns a method of recording data on an optical data carrier having the form of an optical tape, an optical data carrier having the form of a tape, and a system for recording data on an optical data carrier.

### State of the art

In the state of the art, LTO (Linear Tape-Open) tapes are known and used for archiving large volumes of data. These tapes are relatively unstable and require frequent copying to protect the data. The expected lifespan of an LTO tape is usually 15-30 years under controlled environmental conditions, while under uncontrolled temperature and humidity the lifespan decreases dramatically.

In the state of the art, optical tapes operating on a similar principle to optical discs, i.e. having a recordable layer and additional substrate layers to provide protection or mechanical stabilization are also known. These layers may contain glass. The recordable layer is usually very thin and changes its properties under the influence of radiation - especially laser radiation. As a result of a phase change, part of the layer is removed or its physical parameter is changed - for example, the refractive index. The substrate layer provides the mechanical properties necessary to ensure the integrity of the carrier during rewinding, as well as resistance to mechanical stress. Recordable layers are susceptible to erosion and environmental stress, so the durability of optical tapes is even lower than that of LTO tapes. Multiple attempts were made to replace LTO tapes with three-dimensional solid optical data storage in glass such as disclosed in Mitsuru Watanabe et al 1998 Jpn. J. Appl. Phys. 37 L1527, "Documented in Three-Dimensional Optical Data Storage in Vitreous Silica". Despite extensive efforts and foundational breakthroughs, projects like Microsoft's SILICA have not yet succeeded in replacing LTO tapes. Although SILICA has achieved significant milestones - particularly in data durability and long-term archival potential - its writing speed is still insufficient to serve as a practical alternative to current LTO technology. Generally there are two approaches to write on glass: writing on surface of thin plates e.g. CERABYTE or attempt to use whole volume in solid bodies e.g. SILICA project and 5D optical data storage. During surface recording, thin materials are used because only the surface serves as the information carrier, while the rest of the material is redundant. In the case of volume recording (not on the surface), carriers in the form of thick material (glass blocks) are used to increase the capacity of the carrier (data is recorded in volume). In the proposed solution, a non-functional modification was used contrary to this (volume recording combined with a very thin carrier), resulting in unexpected advantages, i.e., a high mechanical strength of the flexible glass tape (not altered by defects on glass surface, which occurs in a case of recording on surface), which can be wound in large quantities, thus increasing the capacity of the carrier. Certain disadvantages of LTO tapes are well recognized for a long time and use of glass surface or volume for recording is since a long time considered a promising alternative in the literature: J. Zhang, A. Čerkauskaité, R. Drevinskas, A. Patel, M. Beresna, and P. G. Kazansky "Eternal 5D data storage by ultrafast laser writing in glass", Proc. SPIE 9736, Laser-based Micro- and Nanoprocessing X, 97360U (4 March 2016); https://doi.org/10.1117/12.2220600, Ken Anderson, Mark Ayres, Brad Sissom, and Fred Askham "Holographic data storage: rebirthing a commercialization effort", Proc. SPIE 9006, Practical Holography XXVIII: Materials and Applications, 90060C (25 February 2014); https://doi.org/10.1117/12.2037429. Nevertheless so far attempt to replace LTO tapes with recording on glass were unsuccessful.

An example of an optical tape is disclosed in US5459018. Glass is used as a substrate layer. A thin (100 nm) coating constituting a recordable layer is provided on the glass substrate layer. The recordable layer can be made of a mixture of metal and oxide, which undergoes a thermal transformation when exposed to a laser, resulting in a change in the refractive index.

US2005117493A1 discloses an optical tape having a plurality of servo data tracks on which payload data is recorded and which are arranged longitudinally and adjacent to each other over the entire width or part of the width of the optical tape. The tape further contains servo address tracks indicating the appropriate location of the corresponding one of the servo tracks on which the payload data is recorded. This allows payload data to be recorded simultaneously on multiple tracks of different widths. The recording method disclosed in US2005117493A1 comprises using a laser to make the tracks on the recordable layer, which, under the influence of radiation, changes from a crystalline phase to an amorphous phase due to melting resulting from thermal action. The use of thermal transformations limits the recording density because they are imprecise and must occur on a relatively large area of the carrier (in this case, the surface of the recordable layer). US2005117493A1 discloses an apparatus for recording data on a tape comprising means for rewinding the tape and two lasers adapted to record servo data tracks and servo address tracks and a verification unit.

US9208813 discloses a method for reading a rewindable optical tape using a camera directed at it and image processing techniques.

US5321683 discloses a method and apparatus for reading digital data recorded on an optical tape in an optical tape reading system comprising an optical tape and an illumination system. The optical tape contains data that is recorded along multiple tracks of symbols referred to as bit cells in US5321683. Each path contains a line of bit cells, and each bit cell has either a first point power reflection coefficient representing the first binary value or a second point power reflection coefficient representing the second binary value. The illumination system is used to illuminate a selected area of the optical tape including a plurality of bit cells with incident light. A method of illuminating and reading data recorded on an optical tape includes a first step of generating a collimated coherent beam of light directed/guided into the optical tape, and a second step of imaging the coherent beam of light into a selected area of the optical tape including a plurality of bit cells. Reading both in the reflection configuration, in which the light reflected from the selected area of the optical tape is analyzed for reading, and in the transmission configuration, in which the light passing through the selected area of the optical tape is analyzed for reading is provided. EP4044182A1, discloses glass data carrier recorded with data engraved with lasers on its surface. It also discloses embodiment of woundable tape. Such data carriers are prone to mechanical damage when being bent or wound. Acceptable radius of curvature of recorded carrier is significantly higher than the empty one. It is because glass breakage depends on defects located on edges and/or surfaces of glass substrates.

EP1494229 discloses recording in the volume of a transparent optical tape in which several recordable layers made of semiconductor material are used. The refractive index of these layers can be changed by exposing them to a pulsed laser, e.g. a femtosecond laser.

There are known solutions in the state of the art that use writing directly on glass. Glass is a promising data carrier due to its durability, corrosion resistance and the fact that it combines good optical and mechanical properties. EP3544936 discloses a method for etching data symbols on the surface of a glass plate produced by the Float method using a pulsed laser. A two-dimensional pattern of data symbols is created on the surface of the glass plate using the pulsed laser. It is indicated that a variety of lasers can be used to create data symbols on the edge or surface of the plate. Due to the use of etching, the size of the symbols produced is of the order of 100 µm. This technique does not allow recording dense enough for application in large data carriers such as LTO tapes. EP3544936 discloses that numerous different types of lasers can be used, including argon, ion (such as xenon or krypton), dye, FEL, GaN, or laser diodes. Picosecond and femtosecond lasers are mentioned as options. A similar solution is disclosed in JP3521221, which proposes recording with the use of a femtosecond laser resulting in the change in the refractive index through thermal transformation.

### Problem to be solved

The applications of optical tapes are limited by their relatively low durability and multi-layer structure, in which the recordable layer must be protected with additional layers, which results in an increase in the thickness of the tape. The lifespan of existing solutions is (depending on storage conditions) several, a dozen or a maximum of 30 years (in the case of LTO tapes stored in controlled conditions). This is at least an order of magnitude shorter than the real demand. The short lifespan of existing solutions means that all data must be periodically transferred to a new carrier, which involves significant financial and environmental costs. On the other hand, optical recording mechanisms based on thermal phase changes are imprecise, which translates into limitations in recording density. Additionally attempts to write durable information in volume of glass known in the art suffer from limited recording speed. The aim of the invention is to solve these problems. The further aim of the invention is to provide geometrical parameters of the tape - width and thickness most suited for high capacity within a volume and easiest for accommodation.

### Summary of the invention

The method of recording data on an optical data carrier in the form of a rewindable tape having a recordable layer susceptible to recording according to the invention comprises a step of applying data symbols to the recordable layer by creating voxels with a locally changed refractive index by subjecting the recordable layer to the impact of electromagnetic radiation pulses from a pulsed source of focused radiation directed/guided to the tape being rewound. The step of applying uses a tape that is transparent along its thickness to electromagnetic radiation with a wavelength of 2000 nm or less, allowing for convenient reading. The material of the recordable layer includes glass, and the recordable layer has a thickness hither than 1 µm and lower than 20 µm and a width ranging from 7 mm to 18 mm. On the other hand the ratio between width and thickness should be higher than 320. Thanks to this, the recordable layer has sufficiently good mechanical parameters, constitutes also a substrate layer, and ensures extremely durable recording. Moreover it is easily accommodated in existing LTO infrastructure. Intriguingly both width and thickness of the tape were reduced after initial experiments as contrary to firsts tests thickness can be reduced as long as long as width does not exceed given values. The invention requires high focus of the electromagnetic radiation beam used for recording and simultaneously close proximity of the electromagnetic radiation source as the lens applied need to have relatively short focal length. Accordingly sweeping across wide tape requires shifting position of the lens and that in turn results in reduction of recording speed. The invention provides a reasonable tradeoff of this constrains. The step of applying uses a beam of pulsed electromagnetic radiation with a pulse duration of less than 1 ps and a wavelength of less than or equal to 2000 nm. The both limitations determine the recording precision and voxel size. Short pulses are necessary to achieve the ionization of the medium and a change in the refractive index within a volume of the tape (not on its surface) without thermal melting of the medium by heating. This has an effect of highly localized change of optical parameter e.g. refractive index without significant change of mechanical parameters of glass tape. Additionally, it does not cause any defects on the surface of the glass (such defects have a significant impact on the tape's bending strength and longevity, as these defects are initiators of glass breakage). This contributes to very long durability of the recording and reduced risk of damage from bending during winding and rewinding of the tape. Using radiation with a wavelength less than or equal to 2000 nm allows for sufficiently small voxel sizes. The electromagnetic radiation is focused inside the volume of the recordable layer of the tape in order to obtain in at least one voxel the peak intensity of the radiation beam, to obtain a local change in the refractive index due to the temporary ionization of the material of the recordable layer. Causing this phenomenon requires a sufficiently high peak intensity of the radiation beam. The electromagnetic radiation beam is moved during the successive pulses relative to the tape being rewound to obtain at least a two-dimensional pattern of voxels. In the case of multi-voxel recording, this effect can be achieved by just rewinding, but when recording one voxel in a pulse, it is also necessary to move the beam perpendicular to the length of the tape.

The tape used advantageously has thickness ranging from 1 µm to 8 µm or even lower from 1 to 4 µm. Thickenss of 4 µm or lower was difficult in initial tests due a need for precise beam focusing and decrease of mechanical properties but in tests proved to be useful and extremely efficient in terms of relation between volume of data to space occupied, especially in combination with width of the tape 12 mm.

The tape used has a length greater than 100 m, and preferably it has a length ranging from 500 m to 1500 m. Tapes of this length provide a large capacity, and they can also fit into containers with dimensions similar to LTOs.

Preferably, the beam of pulsed electromagnetic radiation is Gaussian beam and has a quality parameter M² of less than or equal to 1.3.

Preferably the beam of pulsed electromagnetic radiation used is a radially, azimuthally or spirally polarized beam.

Preferably, the beam of pulsed electromagnetic radiation is focused in a voxel area of 1 µm or less in size.

Preferably, the phase front of the beam of pulsed electromagnetic radiation is shaped using a spatial modulator with one pulse to record data in many voxels at the same time. Thanks to such solutions, the number of mechanical elements in recording devices can be reduced.

Preferably, after recording, the carrier is covered with a damp-proof layer improving its durability.

It should be noted that applying data symbols in the process of creating voxels with a changed refractive index can be done in various ways. Conceptually, it is simplest to encode symbols by introducing distinguishable levels of change in the refractive index within a voxel. However, other voxel parameters, like shape, size, or anisotropy of the change, can be used to encode data symbols. One can also encode data symbols in the spaces between adjacent voxels. Typically, N distinguishable data symbols are used. N is chosen as a power of two so that a single symbol represents log₂N bits of recorded data. Preferably the intensity of the beam of pulsed electromagnetic radiation is tuned to provide multiple levels of change of refractive index e.g. 4 or 16 optionally combined with changes in other degrees of freedom such as shape or anisotropy.

The optical data carrier according to the invention is a tape having a recordable layer with encoded data symbols. The recordable layer is made of a material containing glass, which ensures durability and sufficient mechanical properties for the recordable layer to also constitute a substrate layer. This layer has a thickness higher than 1 µm and lower than 20 µm and a width ranging from 7 mm to 18 mm. On the other hand the ratio between width and thickness should be higher than 320. Such glass tape can be safely rewound and stored. Data symbols are encoded in voxels having a size of 1 µm or less, distributed throughout the volume of the recordable layer. The width of the tape directly affects its capacity. Reducing the tape width below 7 mm makes it insufficient for data archiving (cold storage) applications. On the other hand, using tapes wider than 18 mm makes it difficult to apply high-speed recording and less useful with low thickness tapes. This is because the recording method requires a strong focus of the optical beam, which involves high focusing power and a short focal length. Short focal lengths limit the ability to precisely adjust the position of the beam. To ensure fast recording, the beam must be controlled along the width of the tape, rather than moving the tape relative to the optical system. A width of 18 mm is the maximum range at which recording can occur without mechanically shifting or folding low thickness tape relative to the optical system. The tape is wound along its length, but lateral movement is not allowed as it would significantly reduce the recording speed. Voxels written within the volume of the tape are less susceptible to damage resulting in distorted data symbols.

The recordable layer advantageously has thickness ranging from 1 µm to 8 µm or even lower from 1 to 4 µm. Thickenss of 4 µm or lower was difficult in initial tests due a need for precise beam focusing and decrease of mechanical properties but in tests proved to be useful and extremely efficient in terms of relation between volume of data to space occupied.

Preferably, the recordable layer is made of a material containing boron-silica glass, which is resistant to erosion and chemical attacks.

Preferably, the carrier is covered with a damp-proof layer increasing its durability.

Advantageously change in refractive index has more than two intensity levels. Preferably change in refractive index has 4 intensity levels or 16 intensity levels. For encoding reasons it is preferred if number of distinguishable states of voxels is power of two.

Distinguishing voxels by intensity is a straightforward approach, but not the only one. Voxels, however can be distinguished also by size. Furthermore the change of the refractive index can be birefringent. Birefringence results in change of polarization of incident light and thus adds another dimension for distinguishing voxels. Information can also be encoded in spaces between voxels.

The invention can be implemented with a device for optically recording data symbols on a tape according which comprises a pulsed radiation source generating an electromagnetic radiation beam and a beam forming and guiding system. The pulsed radiation source is adapted to generate electromagnetic radiation with a length of 2000 nm or less in pulses with a duration of 1 ps or less. The power parameters of the radiation source and the beam forming and guiding system are selected so that they are adapted to focus the radiation beam in at least one voxel to obtain a peak intensity in the pulse greater than or equal to 29 MW/cm². The beam forming and guiding system preferably comprises an amplitude modulator and an objective (lens) with an adjustable mirror.

The beam forming and guiding system preferably comprises a polarizer and an adjustable polarization rotating system.

The beam forming and guiding system preferably comprises a spatial phase modulator. The spatial phase modulator can be more conveniently used when a beam-expanding objective is used first. The beam forming and guiding system preferably comprises an objective with a variable imaging plane enabling recording at several different depths.

### Problem solution

According to the invention, recording is achieved by introducing changes in the refractive index not on the surface but inside the volume of the glass layer of the recordable tape. This change occurs under the impact of a light pulse with a duration equal to or shorter than a picosecond. Glass subjected to such a pulse does not undergo a phase transformation to the liquid state, but due to ionization it changes its refractive index locally. Such a change in the refractive index can be made much more precisely than changes in the refractive index due to thermal impact, but a continuous servo path cannot be obtained in this way. The precision of making changes increases the recording density and, as a result, the volume of data that fits on a carrier of the same length.

The phenomenon of temporary and local ionization of the medium used to obtain a change in the refractive index, instead of the thermal phase transformation known in the state of the art, completely changes the achievable recording density.

The advantage of such a recording is that the entire carrier can have the form of a single glass tape, the mechanical properties of which enable rewinding. The lack of the need for a separate recordable layer and a separate substrate layer allows the tape thickness to be reduced and longer tapes to be used in the same cassettes, thus further increasing the achievable data capacity.

Glass, as a recordable layer, also has the advantage of being stable, durable and resistant to corrosion. It has the mechanical properties required for a substrate layer, so an additional substrate layer is not needed. The recordable glass layer itself is also a substrate layer. Data symbols located inside the tape, not on the surface, are protected against distortion or blurring. If the surface is damaged, the data symbols remain intact and the damaged area of the tape can be repaired by polishing the surface.

Surprisingly, it also turned out that changes in the refractive index resulting from ionization with very short pulses of high-energy electromagnetic radiation focused in a small area are more persistent than changes in the refractive index resulting from a thermally forced phase change (melting). The recorded data symbols are difficult to erase without melting the glass and are resistant to common means used to attack data such as electromagnetic pulses. Additionally change of refractive index in the volume of the glass tape without mechanical change in the surface of the tape reduced risk of breaking during multiple rewinding. On the other hand focusing the beam in small range of depths and rewinding the tape allowed much faster recording than in case of known methods for spatial encoding of information within glass. Thus long-felt need has been satisfied and reliable replacement of LTO tape by durable recording in glass has been provided.

### Description of the drawing

The subject of the invention is shown in embodiments in the drawing, in which:
Fig. 1 shows schematically (not to scale) the carrier according to the invention in the form of a glass tape, in a cross-section;
Fig. 2 shows schematically (not to scale) this carrier in a longitudinal section;
Fig. 3 shows schematically a system for recording data on a carrier according to the invention;
Fig. 4 shows a block diagram of a system for recording data on a carrier,
Fig. 5 shows schematically, in perspective, the spatial arrangement of elements in the data recording system;
Fig. 6 shows a block diagram of a another data recording system according;
Fig. 7 shows schematically, in perspective, the spatial arrangement of elements in the data recording system;

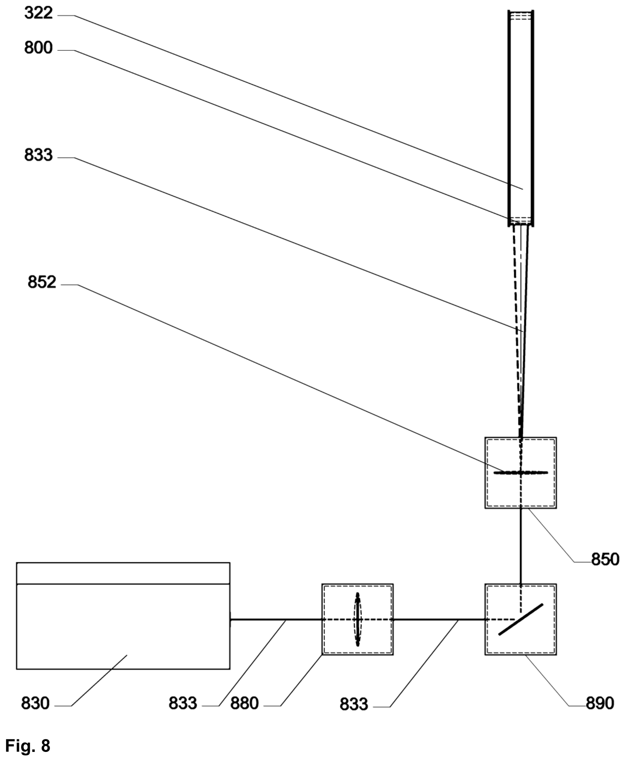

Fig. 8 shows a block diagram of a system for recording data on a carrier according to another embodiment of the invention;
Fig. 9 shows a block diagram of a system for recording data on a carrier according to further embodiment of the invention.
Fig. 10 shows schematically a system for recording data on a carrier according to further embodiment of the invention.
Fig. 11 shows schematically a system for recording data on a carrier according to further embodiment of the invention.

### Description of the embodiments

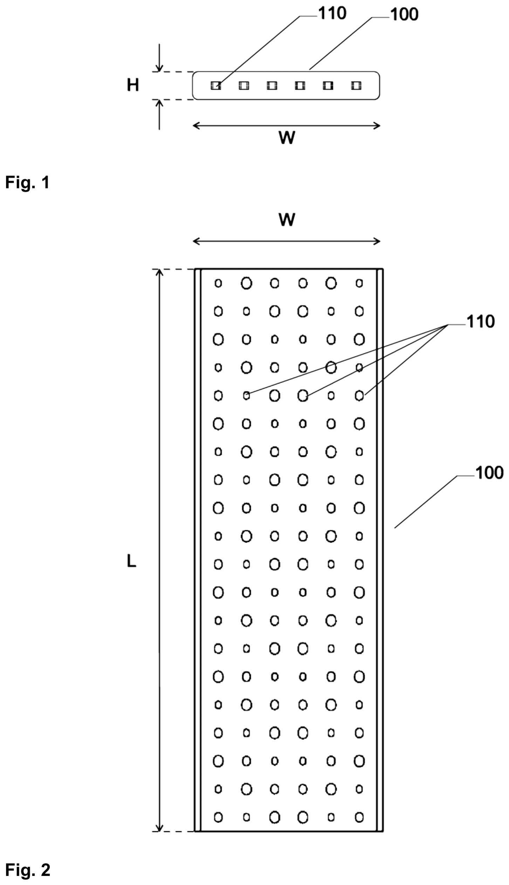

An embodiment of a recorded data carrier **100** according to the invention, in the form of a tape made of silica glass, is shown schematically in Fig. 1 in a cross-section, and in Fig. 2 in a longitudinal section with marked voxels **110** representing data symbols. In this embodiment, each voxel **110** has an intensity of one of 16 levels and therefore represents a 4-bit data symbol.

The dimensions of the data carrier **100** are **W** x **L** x **H,** where **W** = 18 mm, **L** = 1500 m, **H** = 8 um. Such thin glass tape can be freely wound on reels and rewound. The voxels **110** in which the data symbols are encoded are located in the volume of the glass, not on its surface, and are therefore not exposed to the influence of the environment. The size of a single voxel **110** is less than 1 µm. Voxels **110** are spaced from each other at a distance of 1 µm measured from their centers. As a result, a carrier is obtained that could hold 30000 data symbols along the **W** dimension and 500 000 000 data symbols along the **L** dimension. Each symbol represents 4 bits. The total capacity of the carrier is approximately 6.8 TB.

Voxel **110** is a spatial area with a modified refractive index, and its size is defined as its largest dimension in the **W** x **L** reading plane of the tape **100.** It was found that recording can be carried out effectively and advantageous capacities can be obtained with the size of voxel **110** at the level of 1 µm or smaller. It should be noted that the voxel **110** can extend along the **H** dimension by up to several µm, which is much larger than the size in the reading plane defining the voxel size for the purposes of this description.

When focusing an electromagnetic radiation beam to a size of 1 µm in the transverse plane, it is focused in a different way than it results from the principles of geometric optics. The beam narrows to a certain point when it reaches its minimum diameter in the so-called beam waist. At the point of this narrowing, the beam has an essentially constant diameter over a length defined as the confocal parameter. The beginning of the narrowing is set at the tape surface. Thanks to this, it is possible to record in the volume of the glass and not only on its surface. The ionization effect causes a sharp increase in the absorption of the medium, which limits the penetration depth of the beam. The peak intensity of the radiation beam at the end of the narrowing therefore drops rapidly. The ionization effect occurs mainly in the narrowing of the beam, where the power is highest. Obtaining narrowing of a low-diameter beam is easier if the beam quality parameter M² is sufficiently low, i.e. with a value of 1.4 or less. Further narrowing the beam is beneficial for the invention thus a person skilled in the art after learning the teaching of the present invention can apply using vector, Bessel or super oscillatory beams to obtain more narrow beam top.

It was determined that the capacities provided by tapes of 100 m or longer can be useful, although in most archiving applications the required capacities can be obtained with tapes of 500 m to 800 m in length.

The glass serves as both a substrate layer and a recordable layer, and the tape thickness **H** of 20 µm ensures both convenient recording in the manner described below and required mechanical parameters. Data recorded in voxels **110** in the volume of glass have many times greater durability compared to recording on optical tapes known in the state of the art. The data carrier recorded according to the invention proved to be considerably less prone to being worn out during multiple rewinds than the carriers with data engraved on the surface. This was only partly expected by the inventors. Apparently recording on the surface results in surface/edge defects which contribute to reduced resistance to bending stress while change of refractive index below the surface does not. Respective information can be found in 28th Edition of "Electronic Glass Materials Technical Reference Guide" by Nippon Electric Glass - page 5: glass breakage depends on defects located on edges and/or surfaces of glass substrates. 50MPa is considered to be the boundary between "broken" and "not broken" conditions.

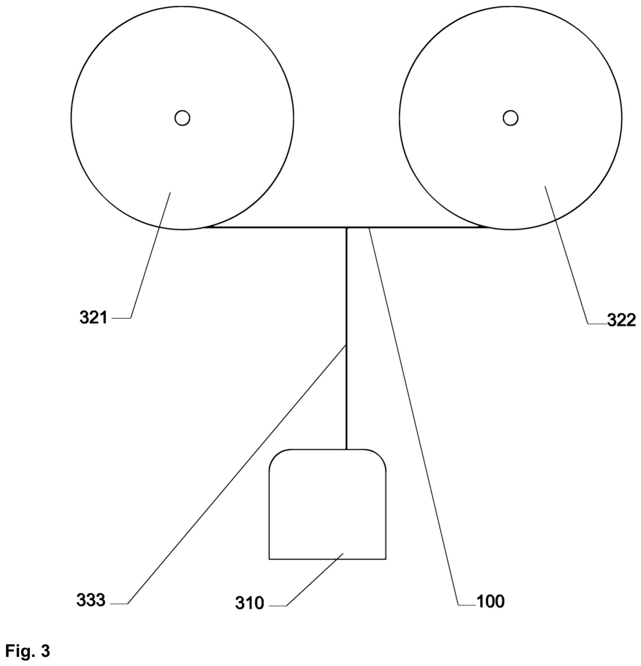

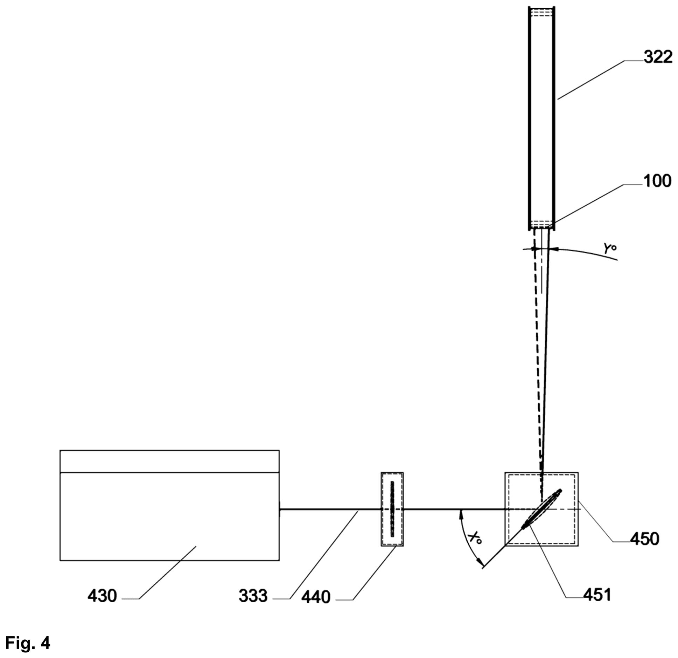

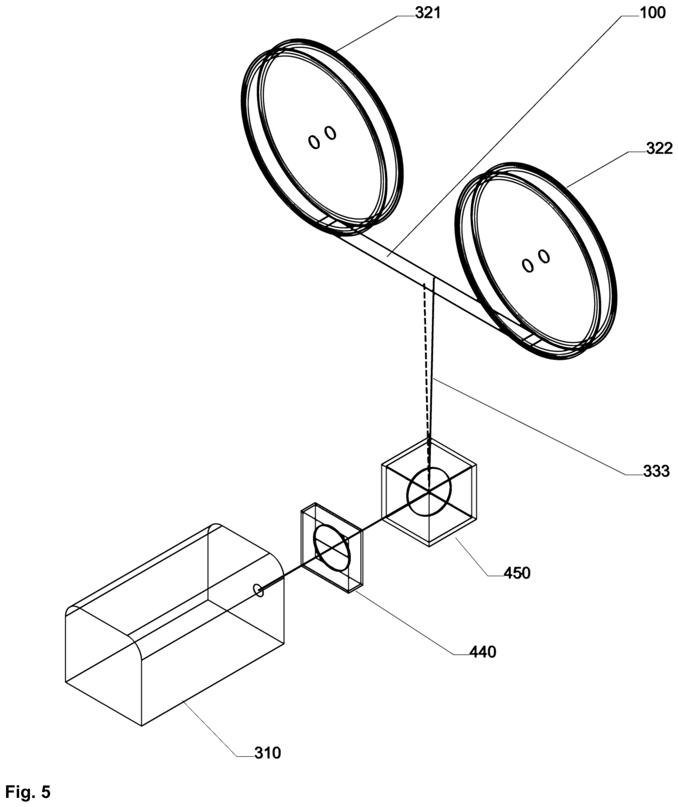

This carrier **100** is recorded with data in the manner described below in a recording system shown schematically in Figs. 3, 4 and 5.

Data on the data carrier **100** is recorded using an electromagnetic radiation beam **333** generated in a beam forming and guiding system **310** in the form of radiation from a femtosecond laser. The data carrier **100** is being unwound from the reel **321** and wound onto the reel **322** so that the electromagnetic radiation beam **333** falls on the unwound section. Single-reel mechanisms are also known in the state of the art and can also be used here.

The source of electromagnetic radiation in the beam forming and guiding system **310** is a pulsed femtosecond laser **430** operating at a wavelength of 210 nm obtained by means of 4th harmonic generation and laser operation at a wavelength of 840 nm, a repetition frequency of 100 MHz, a pulse duration of 800 fs, a pulse energy of 10 pJ and a beam quality parameter M² equal to 1.2. It is important that the beam quality parameter M² is below 1.3 to allow determination of the shape of the recorded voxel **110.**

Using the objective **450,** the electromagnetic radiation beam **333** from the laser **430** can be focused to obtain a maximum peak intensity of the radiation beam in the voxel area of 2.9 GW/cm².

Between the laser **430** and the objective **450** there is an amplitude modulator **440.** The radiation beam **333** originating from the laser **430** passes through the amplitude modulator **440,** which is adapted to change the amplitude of each pulse, with a dynamic range of at least 20 dB.

Using the amplitude modulator, the pulse energy is set, which determines the change in the refractive index in the voxel **110,** where the beam is focused. As a result, the peak intensity values of the beam **333** used to record voxels **110** range from 29 MW/cm² to 2.9 GW/cm². Using a wavelength corresponding to deep UV facilitates the ionization of the medium.

The objective **450** has a focal length of 4 mm and is equipped with a movable mirror **451** inclined at an angle of X° relative to the beam and deflectable so as to allow the beam to be moved within an angular range of Y°. Thanks to this, the position of the beam focusing point can be adjusted within the entire range of a width **W** of the tape **100.**

During recording, the tape **100** is being rewound from the reel **321** to the reel **322.** The tape **100** in the present embodiment is made entirely of silica glass, so it contains only one layer that is both a recordable layer and a substrate layer. During rewinding, the step of applying data symbols to the tape **100** is performed by creating voxels **110** with a locally changed refractive index.

The change is achieved by exposing the glass tape **100** to pulses of radiation in the form of the electromagnetic radiation beam **333** originating from the laser **430.** The exposure to the beam **333** with a sufficient peak intensity for a short time results in the temporary ionization of the medium. The area of voxel **110** subjected to such action does not melt, but is temporarily ionized, turning into plasma in the absence of significant heat exchange with the environment, which ensures the precision of the interaction. As a result, the glass fictive temperature of the material of the tape **100** changes in the local area of the voxel **110.** As a consequence, the refractive index also changes. The amount of change in the refractive index depends on the peak intensity of the beam in the area affected by the electromagnetic radiation beam **333.** Thus, by adjusting the beam power using the amplitude modulator **440,** it is possible to record multi-bit data symbols differing in the value of the refractive index. It was experimentally verified that modulation in the dynamic range of 20 dB allows one to obtain 16 distinguishable levels of the refractive index within voxel **110** and therefore enables simple encoding of 4-bit data symbols.

The amplitude modulator **440** introduces attenuation in the range of 0 to 20 dB to the electromagnetic radiation beam **333** originating from the laser **430.** At the output of the amplitude modulator **440,** the pulse energy is in the range from 0.1 to 10 pJ. The electromagnetic radiation beam **333** is focused in a voxel **110,** the cross-section of which has the shape of a circle at its widest point with a radius of 0.5 µm and an effective area of 0.78 (µm)². The pulse lasts 800 fs. As a result, in the Gaussian-shaped electromagnetic radiation beam focused in the voxel area **110,** the peak intensity is in the range of 29 MW/cm² to 2.93 GW/cm².

The refractive index of the pure tape is n₀ = 1.5384 for a wavelength of λ = 210 nm. Exposing the material in the voxel area to the electromagnetic radiation beam **333** with a peak intensity ranging from 29 MW/cm² to 2.93 GW/cm² leads to a change Δn ranging from 0.000001 to 0.06.

It should be noted that when recording with fewer bits per symbol, the dynamic range may be smaller. In particular, when using dedicated coding and NRZ encoders, a binary notation can be used, in which a change means "1", no change means "0", and the peak intensity is the same for each pulse. For this recording method, even a peak intensity of the beam of 29 MW/cm² is sufficient. In the case of encoding data symbols by changing the Δn value, especially at longer wavelengths, higher intensities of 1 GW/cm² are more convenient. By using peak intensities of the beam above 0.1 TW/cm², it is possible to simplify the data reading system.

The wavelength of the radiation translates into how easy it is to focus the beam in an area of the voxel. In practice, this is achieved by using a pulse of electromagnetic radiation affecting the glass with a wavelength of less than 2000 nm. The use of pulses with a duration shorter than 1 ps ensures that there is no melting of the material and that the change in the refractive index is the result of temporary ionization.

Deflecting the electromagnetic radiation beam **333** with the mirror **451** allows it to be moved across the width **W** of the tape **100** and to apply a row of voxels **110.** By rewinding the tape **100,** subsequent rows are added. By using beam sweeping with a mirror, the movement of the beam across the tape **100** is much faster than the movement of the tape **100.**

The bottleneck of the system is the pulse repetition frequency. In the present embodiment, a laser with a pulse repetition frequency of 100 MHz is used. This means that the recording symbol rate is limited to 100 Mbd, which translates to a write speed of 50 MB/s.

Although speed is secondary to durability in some applications, for practical purposes the use of radiation sources with a pulse repetition frequency of less than 1 MHz does not make sense for recording techniques that produce one point per pulse. According to the invention, multi-point recording techniques are also postulated in which lower repetition frequencies can be used.

The beam forming and guiding system in the present embodiment consists of the radiation source **430,** the amplitude modulator **440,** and the objective **450** with the movable mirror **451.**

The pulse duration and its energy are parameters of the radiation source **430,** while the size and effective area of a voxel and the energy changes introduced by the amplitude modulator **440** are determined by the beam forming and guiding system. By selecting these parameters, one can adjust the peak intensity of the beam in the voxel **110** during recording, as well as the size and effective area of the recorded voxel **110.**

It is important that the tape **100** is transparent to radiation of 2000 nm or less. Thanks to this, the tape **100** can be easily read by rewinding it under the camera of the transmission microscope.

The choice of tape dimensions depends on the application. Generally, one can easily obtain capacities similar in range to LTO tapes by using glass tapes with a length of **L** ranging from 500 to 800 m. In some applications, one can use tapes as long as 1.5 km, but this translates into the size of the entire carrier and the rewinding time. The thickness of the tape determines its mechanical parameters, susceptibility to winding and tearing resistance. It was found that tapes with a thickness **H** of less than 1 µm are difficult to produce, inconvenient to rewind and make it difficult to focus radiation within a volume, below the surface. In turn, tapes with a thickness **H** above 20 µm cannot be too long. Tapes with widths ranging from 7 mm to 18 mm wind well. Using wider tapes is problematic due to the risk of waving and bending, while narrower tapes accommodate few data symbols.

It should be noted that data symbols can be encoded not only using the amount of change in the refractive index in the voxel **110** but also using the size of voxel **110,** the shape of the changed voxel **110,** and the distance between voxels **110.** This is possible using optical systems which are able to form and sweep the electromagnetic radiation beam **333** known in the state of the art. Using several of these options allows for more bits per symbol.

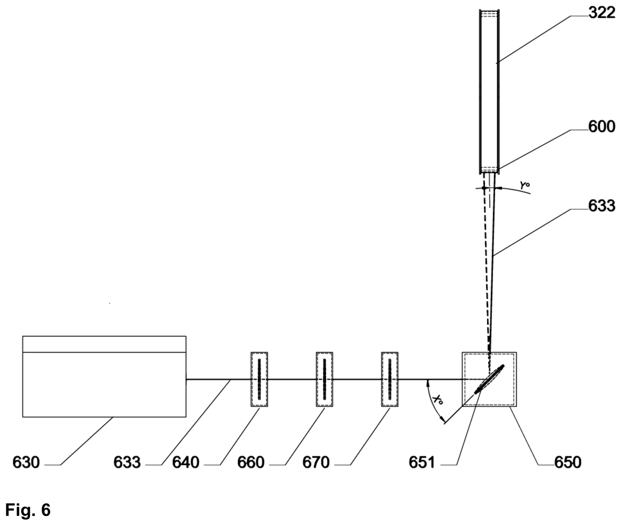

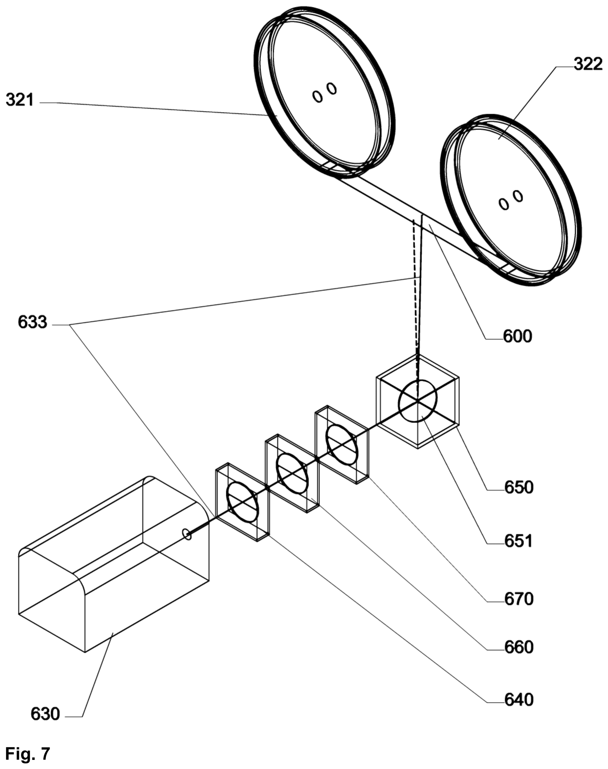

In another embodiment, the recording system illustrated in Fig. 6 and 7 is used, comprising a pulsed femtosecond laser **630** with a central wavelength of 500 nm obtained using the second harmonic, a repetition frequency of 200 MHz, a pulse energy of 1000 pJ, and a beam quality parameter M² = 1.02. The pulse duration is 8 fs. The maximum peak intensity of the beam achieved in the recording area is 117 TW/cm². As in the previous embodiment, the electromagnetic radiation beam is subjected to amplitude modulation, but the amplitude modulator **640** with greater dynamics of 30 dB is used here.

Then, the electromagnetic radiation beam **633** passes through a polarization control system comprising a polarizer **660** and an adjustable (controlled) polarization rotating element **670,** e.g. a half-wave plate with electronically adjustable setting, operating at a wavelength of the laser **630.**

The electromagnetic radiation beam is guided to an objective **650** with a focal length of 0.5 cm equipped in a movable mirror **651.**

The system works analogously to the one discussed in the previous embodiment. The electromagnetic radiation beam **633** falls on the mirror **651** having a galvomechanism enabling the beam trajectory to be changed within a range of 5 degrees. The electromagnetic radiation beam **633** is guided to the data carrier - a glass tape **600** with dimensions **W** x **L** x **H** = 7 mm x 3000 m x 1 µm, which is being rewound in the focusing area of the electromagnetic radiation beam **633** so that the maximum of the peak intensity of the beam falls on the depth H/2 in the tape **600,** and the change in the incidence angle Y of the beam caused by the galvomechanism runs along the **W** dimension in a plane substantially perpendicular to the direction of rewinding **L** of the tape **600.** The tape **600** is made of boron-silica glass. Such glass is chemically more resistant than conventional silica glass, which allows for increased recording durability and insensitivity to chemical degradation of the material. Tapes having length longer than 2000 m when have small enough thickens - below 5µm are highly efficient in terms of relation of data storage volume and physical volume.

The recording of data symbols is performed by inducing permanent phase changes in the area of voxel **110** in the structure of the glass recordable layer, i.e. changes in the refractive index due to modification of the glass fictive temperature, as a result of exposure to electromagnetic radiation causing temporary ionization with different intensity. This is done by changing the energy of the incident laser pulse and changing the polarization state of the light at the data recording location in voxel **110.**

The amplitude modulator **640** introduces attenuation in the range of 0 to 30 dB to the electromagnetic radiation beam **633** originating from the laser **630.** At the output of the amplitude modulator **640,** the pulse energy in the beam **633** is in the range from 1 to 1000 pJ. The pulse lasts 8 fs. The beam is focused in a voxel **110,** the cross-section of which has the shape of a circle at its widest point with a radius of 0.25 µm and an effective area is 0.2 (µm)². As a result, when using a Gaussian beam, the peak intensity in the voxel area ranges from 0.1 TW/cm² to 117 TW/cm². Small voxel effective area enables high recording density and obtaining the required peak intensity of the beam.

The refractive index of the pure tape at a wavelength of λ = 500 nm is n₀ = 1.5214. This tape in a voxel area of 0.25 µm was exposed to the electromagnetic radiation beam **633** with the peak intensity ranging from 0.1 TW/cm² to 117 TW/cm².

Using the amplitude modulator **640** and the polarization control system allows one to obtain at least 16 levels of the peak intensity of the radiation beam **633** and 4 directions of its polarization.

Adjusting the peak intensity of the radiation beam **633** translates into the amount of change in the refractive index in a voxel **110** in the glass of the tape **600.**

Exposing glass to polarized light induces birefringence. It was found that the 4 directions of birefringence can be easily distinguished using fast and known measurement techniques.

As a result, in the present embodiment, a 16-state modulation of the amount of change in the refractive index and a 4-state modulation of the birefringence direction are obtained. Thus, 64 distinguishable states and an encoding of 6 bits per voxel **110** are obtained. The distance between data symbols measured from center to center in the **L x W** plane is 500 nm.

The reading is performed by illuminating the tape **600** with monochromatic coherent light with adjustable polarization, and then recording and analyzing the image resulting from interference on the linear array of detectors. It should be noted that the reading of data recorded in this way on the carrier can be performed using any technique suitable for measuring the birefringence and phase of light.

The beam forming and guiding system in the present embodiment consists of the amplitude modulator **640,** the polarizer **660,** the adjustable polarization rotating element **670,** and the objective **650** with the movable mirror **651.** In general, the beam forming and guiding system does not need to sweep the electromagnetic radiation beam in a plane perpendicular to the direction of translational movement of the tape. The beam sweep plane can be rotated slightly relative to the direction of movement of the tape to compensate for the "skew" of the voxel pattern due to translational movement. One can also, by design, use an arbitrary "skew" of the voxel pattern.

The pulse duration and its energy are parameters of the radiation source **630,** while the size and effective area of a voxel and energy change (introduced by the amplitude modulator **640)** are determined by the beam forming and guiding system **633.** By selecting these parameters, one can adjust the peak intensity of the radiation beam in a voxel **110** during recording, as well as the size and effective area of the recorded voxel.

In another embodiment, a recording system comprising a pulsed femtosecond laser **830** with a pulse repetition frequency of 1 GHz, a maximum pulse energy of at least 2 mJ, a beam quality parameter of M² = 1.4, and a pulse duration of 200 fs is used. A beam originating from the laser **830** passes through an objective **880** and is expanded therein, and then hits a spatial phase modulator **890.** The spatial phase modulator **890** encodes data in the phase of the wave front of the electromagnetic radiation beam **833.** As a result, the spatial Fourier transform of the wavefront of the electromagnetic radiation beam **833** forms encoded information at the focal point of the objective **850,** which allows recording multiple points in one pulse and also guiding the electromagnetic radiation beam **833.** Focusing with an objective implements the spatial Fourier transform of the incident beam. Preparing the wavefront of the beam and shaping the inverse transform of the desired symbol pattern on it results in the reproduction of this pattern at the focal point. The spatial phase modulator allows one to shape the wavefront according to the objective or lens used. The spatial phase modulator can also be used without a beam-expanding objective, but expanding of the beam facilitates proper illumination of the tape.

The electromagnetic radiation beam **833** originating from the laser **830** is guided to the objective **850** with focal length = 5 mm. The objective **850** preferably has a variable imaging plane **852** with a range of 20 µm and a resolution of 5 µm, which provides the ability to spatially record in three layers or use the third dimension to increase the number of bits per symbol. Such an objective can also be used in the previous embodiments.

The tape **800** is made of silica glass. Data is recorded by inducing permanent phase changes in the glass structure, i.e. changes in the refractive index as a result of modification of the glass fictive temperature, as a result of exposure to electromagnetic radiation causing temporary ionization with various intensity.

Modification of the recorded information patterns is carried out by controlling the shape of the beam in the focal point using the spatial phase modulator **890.** In this way, it is possible to both control the electromagnetic radiation beam and record 1000 or more points with different refractive index change amplitude in one pulse with resolution of 200 nm. Spatial modulation is implemented using the technique disclosed in: Satoshi Hasegawa and Yoshio Hayasaki, "Polarization distribution control of parallel femtosecond pulses with spatial light modulators," Opt. Express 21, 12987-12995 (2013).

The beam forming and guiding system in the present embodiment consists of the objective **880,** the spatial phase modulator **890,** and the objective **850.**

The pulse duration and pulse energy are the parameters of the radiation source **830,** while the energy distribution in the beam, including the size and effective area of a voxel, are determined by the beam forming and guiding system. By selecting these parameters, one can adjust the peak intensity of the radiation beam in voxels **110** during recording, as well as the size and effective area of a voxel.

To read the data, the tape is illuminated with monochromatic coherent light. The reading is then performed by analyzing the image resulting from interference using an array of detectors.

To extend the lifespan of the carrier according to the invention, it can be coated with a layer of a damp-proof material, e.g. acrylate. Covering can be applied to an empty data carrier before it is recorded, or the data carrier can be covered after recording. In the latter case, it is easier to avoid damaging the protective layer during recording.

The invention is applicable in data archiving techniques, in particular data requiring a high level of protection against destruction as a result of environmental exposures or intentional electromagnetic attacks.

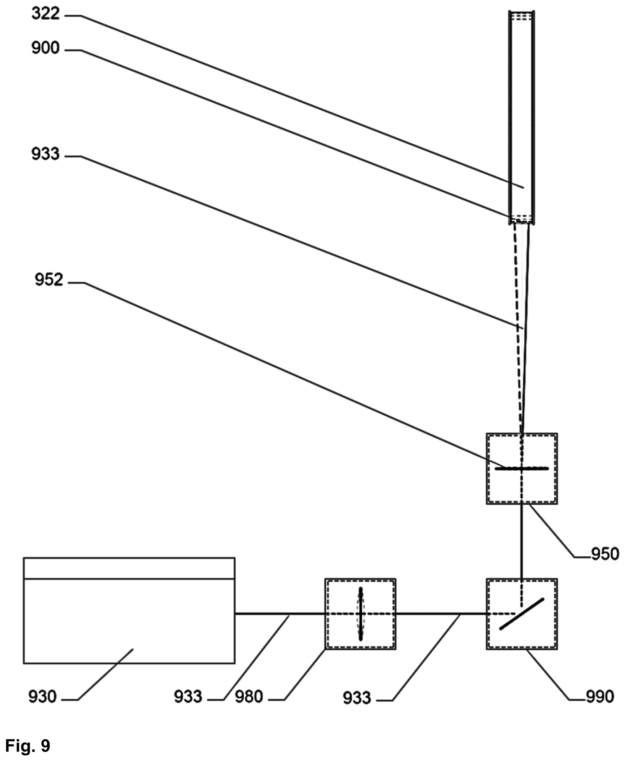

In another embodiment discussed below with reference to Fig. 9, a recording system comprising a pulsed femtosecond laser **930** with a pulse repetition frequency of 100 MHz, a maximum pulse energy of at least 2 mJ, and a pulse duration of 800 fs. An output beam is structured into super-oscilatory beam using super-oscillatory lens **930** and is expanded therein, and then hits a acousto-optic deflector **990.** The acousto-optic deflector **990** changes the angle of the beam **950** incident into telecentric scan lens **952.** Small incident angle change of the wavefront **950** is translated into over 2 cm lateral movement of a focal spot **900.** As a result, the super focused spot of the electromagnetic radiation beam **933** forms encoded information at the focal point of the telecentric scan lens **950.** Focusing using super oscilatory lens allows to obtain voxels of size below diffraction limit in the glass tape **322.** Thus, voxels of crossectional dimensions below 0.5 µm can be obtained.

The electromagnetic radiation beam **933** originating from the laser **930** is guided to the super-oscillatory lens **950** with focal length = 10 mm. The telecentric scan lens **950** preferably has a scanning range of 2 cm. Such lenses can also be used in the previous embodiments.

The tape **322** is made of silica glass. Data is recorded by inducing permanent phase changes in the glass structure, i.e. changes in the refractive index as a result of modification of the glass fictive temperature, as a result of exposure to electromagnetic radiation causing temporary ionization with various intensity.

Modification of the recorded information patterns is carried out by controlling the position of the beam in the focal point using the acousto-optic deflector **990.** In this way, it is possible to control the position of focal point with resolution of 100 nm.

The beam forming and guiding system in the present embodiment consists of the super-oscilatory lens **980,** the acousto-optic deflector **990,** and the telecentric lens **950.**

The pulse duration and pulse energy are the parameters of the radiation source **930,** while the energy distribution in the beam, including the size and effective area of a voxel, are determined by the beam forming and guiding system. By selecting these parameters, one can adjust the peak intensity of the radiation beam in voxels **110** during recording, as well as the size and effective area of a voxel.

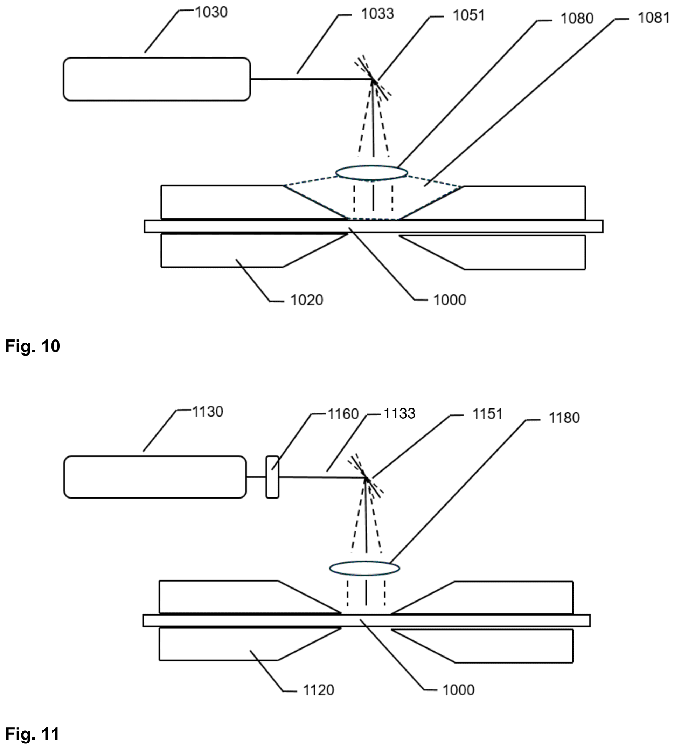

In another embodiment discussed with reference to Fig. 10, the recording system, comprises a radiation source **1030** with a ', obtained via fourth-harmonic generation from a fundamental wavelength of 840 nm. The laser **1030** has a repetition frequency on the order of 100 MHz and delivers pulses of about 800 fs duration with a pulse energy of 60 nJ. The beam quality factor is maintained at M^2 ≤ 1.3 to facilitate tight focusing and well-defined voxel formation. Laser **1030** generates radiation beam **1033** directed to a galvo mirror **1051** so the beam **1033** is deflected in desired direction.

Using an telecentric objective **1080** immersed in oil **1081,** the laser beam is focused to a spot of about 0.5 µm in diameter within the volume of the tape, achieving a peak intensity on the order of 30 GW/cm² at the focal point. This power density is comparable to that used in prior embodiments and is sufficient to induce permanent refractive index changes in silica glass without thermal damage. The objective is an oil-immersion, high-NA lens; an index-matched immersion oil **1081** fills the gap between the lens and the tape **1000,** eliminating refractive index mismatch at the interface and allowing the beam to be sharply focused inside the thin glass tape. The oil **1081** is kept between the telecentric scan lens objective **1080** and the tape using mechanical tape positioning system **1020.** Positioning system **1020** is realized as guiding block with a slot for guiding the tape **1000** and open area for immersion objective **1080** located below the objective **1080.** Immersion in oil improves angles of the beam allowing obtaining greater NA. It requires selecting oil with low non-linearities and requires using sealed positioning system.

The data carrier in this embodiment is a single-layer silica glass tape **1000** of width **W** = 12 mm, length **L** ≈ 1300m, and thickness **H** = 4 µm. The tape is made entirely of silica glass, serving as both the recordable layer and the substrate layer. During operation, the tape is unwound from a supply reel and wound onto a take-up reel so that an uncoiled section of the tape passes through the recording area within positioning system **1020** under the objective **1080.** The immersion objective **1080** focuses the beam into the volume of the tape, and a galvo-driven mirror integrated in the objective assembly deflects the beam within a small angular range. This angular deflection is translated by the telecentric optics into a lateral scan of the focal spot across the entire tape width **W** of 12 mm. In this way, the beam can be swept across **W** while the tape moves longitudinally (along **L**), writing voxels in a two-dimensional raster. The beam is focused at approximately half the tape thickness (around **H**/2) so that the 1 µm focal waist lies well below the surface, ensuring the voxels are formed within the glass volume rather than at the surface. Writing in the volume provides protection from environmental exposure and avoids creating surface defects, thereby preserving the tape's mechanical strength during winding (as previously observed in the first embodiment).

Data recording in this system is performed by inducing permanent phase changes in the glass of tape via ultrafast laser exposure. The intense, ultrashort pulses cause temporary multi-photon ionization of the silica in the focal region without melting the material of the tape **1000.** This results in a localized modification of the glass fictive temperature and a corresponding change in refractive index within each voxel. Because the voxels are formed beneath the surface, the recorded data bits (represented by refractive index-modified regions) are highly stable and protected from surface wear or environmental corrosion. The use of deep-UV wavelength (~210 nm) further facilitates nonlinear absorption in silica, enabling efficient energy deposition inside the transparent medium. Each pulse thus creates a sub-micron voxel with a changed refractive index, and by controlling the pulse energy, the magnitude of index change Δn can be modulated to encode multi-bit symbols. In this embodiment, the amplitude modulator is used to adjust the pulse energy for each voxel, providing a dynamic range of attenuation of about 20 dB. The radiation beam from laser passes through the amplitude modulator, which can modulate each pulse's energy. At the output of modulator, the pulse energy thus varies from approximately 0.6 nJ up to the full 60 nJ. When focused into a voxel, which in this case has a roughly circular cross-section of ~0.5 µm diameter (effective area ~0.4 µm²), these pulses produce peak intensities from about 7.6×10^7 W/cm² (for the lowest energy modulated pulses) up to 7.6×10^9 W/cm² for the highest-energy pulses. By selecting the appropriate pulse energy via modulator, 16 distinct refractive index levels can be achieved in the voxels allowing each voxel to represent a multi-bit symbol (e.g. 4 bits per voxel with 16 levels). Using an oil-immersion telecentric lens **1080** also improves the consistency of these multi-level modifications, because the focal spot size and shape remain constant across the entire width of the tape **1000,** and spherical aberrations are minimized by the index-matching oil **1081.**

The radiation source **1030** advantageously comprises the laser with an embedded amplitude modulator. The beam forming and guiding system comprises the immersion telecentric objective **1080** with the galvo scanning mirror **1051.** The pulse duration and pulse energy are parameters determined by the laser **1030,** while the focal spot size and intensity distribution (and hence the voxel dimensions and index change amplitude) are governed by the optical system (objective and modulator). By appropriately selecting these parameters, the peak intensity delivered in the voxel and the resulting voxel size/shape can be finely controlled. It is noted that an immersion-based telecentric focusing approach as used here could be applied in the previous embodiments as well. In summary, this embodiment demonstrates that using an oil-immersed high-NA telecentric optical system, one can reliably write data into the volume of a thin silica glass tape with sub-micron resolution and multi-bit capacity, while maintaining the high power density (~7.6 GW/cm²) required for stable, permanent data encoding in the glass.

In a further embodiment discussed with reference to Fig 11, the data recording system employs a cylindrical telecentric optical setup for scanning in a single direction across the width **W** of the tape **1000.** A source **1130** with pulsed femtosecond laser is used with a fundamental output at wavelength of 1030 nm, which is frequency-doubled to provide a writing wavelength of approximately 515 nm (second harmonic). The laser operates at a repetition rate of a 500 MHz, delivering pulses of ~500 fs duration and about 60 nJ energy. The beam exiting the laser is initially linearly polarized; it then passes through a polarization-conversion element **1160** realized as an S-waveplate, which transforms the linearly polarized Gaussian beam into a radially polarized beam. Radially polarized light is a type of vector beam known to produce a smaller focal spot than conventional linear polarization when focused with high-NA optics. In this system, the radially polarized beam is directed into a telecentric cylindrical objective **1180,** which focuses the beam strongly in one transverse axis (across the tape width W) while maintaining a relatively collimated profile in the orthogonal axis (along the tape length L). As a result, the focal intensity distribution in the tape is an elliptical voxel whose cross-section in the W-L plane is approximately 0.25 µm by 0.5 µm. The 0.25 µm dimension lies along the scanning direction (tape **1000** width **W),** and is achieved thanks to the combination of high numerical aperture focusing and the radially polarized beam, which generates a strong longitudinal field component and tighter lateral confinement at focus. The longer dimension (~0.5 µm) lies along the tape's width, where the cylindrical lens provides a gentler focus. By using this cylindrical focusing scheme, the system writes asymmetric voxels that are smaller than 1 µm in both dimensions, further increasing the linear data density across the tape width. The telecentric design of the objective ensures that even as the beam is scanned off-axis, it remains perpendicular to the tape and the focal plane stays flat, so the spot size and shape do not vary across the 12 mm span. A single-axis galvanometer mirror **1151** is used to sweep the focused beam **1033** across the tape's width; because the optics are telecentric, a small angular deflection of the beam by mirror results in a linear translation of the focal spot across the **W** = 12 mm tape width, covering the full span of the tape in the scanning direction. Meanwhile, the tape **1000** is continuously driven in the L direction under the focus as described in reference to in previous embodiments, so that voxels can be sequentially recorded in rows along the length of the tape **1000.** In the present embodiment, the tape **1000** is again a single-layer silica glass tape with a width of 12 mm and a thickness **H** = 4 um). A tape length **L** = 1500 m may be used to achieve very high data capacity. The focus of the cylindrical lens is adjusted to lie at approximately half the tape thickness (H/2), so that the sub-diffraction focal spot is formed well inside the glass volume. Because only one scanning axis is needed (across the width), the optical system is simpler and can operate at high speed for that axis, while the tape motion through positioning setup **1120** provides the second axis for data placement.

Recording of data using the cylindrical radially-polarized beam follows the same general principle of femtosecond-laser-induced index modification described previously The high-intensity, short laser pulses create a localized plasma in the focal region of the glass (through nonlinear absorption), which leads to a rapid, localized increase in the glass's fictive temperature and a consequent, permanent change in refractive index within the elliptical voxel. Importantly, the use of radial polarization yields a very concentrated focal energy distribution: the electric field's longitudinal component (along the optical axis) contributes to a tighter confinement of energy, helping achieve the 0.25 µm spot size in one axis. This sub-wavelength focusing is enabled without exotic optical elements - it arises from the polarization state and the high NA of the cylindrical objective - and thus provides a practical way to surpass the conventional diffraction limit in one dimension. Each pulse writes a tiny birefringent or refractive index-altered region in the silica, with the voxel's shape (elliptical) and orientation (aligned to the tape axes) being highly consistent pulse to pulse. Because the voxel is not spherical, one could in principle encode additional information in its geometry (for example, using the presence or orientation of an elongated feature as another data variable). The change in refractive index Δn produced in each voxel depends on the pulse's peak intensity, just as in prior embodiments. To allow multi-level data encoding, the pulse energy is modulated using an amplitude modulator placed after the laser. The modulator provides up to ~30 dB of attenuation range, so that the pulse energy incident on the tape can be varied from roughly 0.06 nJ up to 60 nJ. By adjusting the pulse energy, a series of discrete refractive index change levels can be achieved. As in the second embodiment described above, at least 16 distinct intensity levels (and thus 16 index change levels) can be reliably produced with a 30 dB modulation range, allowing each elliptical voxel in this embodiment to represent a 4-bit data symbol based on the amount of index change. The asymmetric spot shape offers the potential to pack voxels closer together along the width. Indeed, since the focused spot is only ~0.25 µm wide in the cross-track direction, the center-to-center spacing between adjacent voxels (tracks) along the width can be reduced to around 0.3-0.4 µm, greatly increasing the number of data tracks across the 12 mm tape compared to the 1 µm spacing of the first embodiment. Along the tape length, the voxels are about 0.5 µm in size, and the spacing between voxels (set by pulse timing and tape speed) can likewise be on the order of 0.5 µm or more, as needed to avoid overlap. Therefore, this cylindrical lens embodiment yields an extremely high linear density of symbols, leveraging the sub-diffraction focusing in one axis for maximizing data capacity.

Radiation source **1130** advantageously comprises laser with embedded amplitude modulator. The beam forming and guiding system in this embodiment consists of the radial polarization converter, and the cylindrical telecentric objective with the scanning mirror. As with previous systems, the laser pulse characteristics (pulse duration, base energy, and wavelength) are defined by the source, while the size and effective area of each voxel and the energy delivered to it are determined by the combination of the modulator and focusing optics. By appropriate selection of these parameters, the peak intensity in the voxel and the voxel's dimensions (both the 0.25 µm and 0.5 µm axes) can be precisely controlled. This embodiment demonstrates how using cylindrical optics and radially polarized beams (as a form of the "vector beams" suggested earlier) can further narrow the beam waist beyond the diffraction limit in one direction, thus achieving even smaller voxel sizes. Such a radially polarized, asymmetrically focused beam approach may be combined with other techniques disclosed in this specification. For example, one could apply radial polarization to the multi-spot parallel recording system of, or use a super-oscillatory phase mask in conjunction with a cylindrical lens to obtain even smaller focal spots. It will be acknowledged by persons skilled in the art that various combinations of polarization control, beam shaping, and focusing schemes can be employed without departing from the scope of the invention. In particular, the present embodiment highlights a route to increase data density (and potentially data throughput) by using one-dimensional scanning with telecentric cylindrical lenses, which simplifies the optical architecture while still enabling sub-micron (and sub-diffraction) feature sizes. The result is a robust method of writing data into a 12 mm silica glass tape with extremely fine track spacing and high fidelity. As with all prior embodiments, the recorded tape can be read out by known optical methods - for instance, by passing the tape under a high-resolution microscope or interferometric reader that detects the phase and/or birefringence changes in each voxel - ensuring that the multi-level and polarization-insensitive data recorded by this radially polarized writing beam can be retrieved reliably. The use of radially polarized writing beams in this embodiment thus further advances the capacity and durability of the optical tape system. Similarly azimuthally or spirally polarized beams can be used.

To read the data recorded according to the invention, the structured illumination microscope is used.

Accordingly, while specific embodiments of the invention have been described in detail, it will be appreciated by those skilled in the art that various modifications, substitutions, and changes can be made without departing from the scope of the invention as defined by the appended claims. The present invention, by enabling volumetric data encoding within a flexible glass carrier, not only departs from conventional paradigms of surface-based or rigid-volume recording, but also provides a novel and advantageous balance between mechanical flexibility and data storage integrity. This combination enhances both the speed and durability of the recording process, marking a significant advancement in the field of data storage technologies. Person skilled in the art is able to suggest various schemes of encoding based on various parameters of produces voxels and gaps between the voxels without departing from the scope of protection as defined in the claims.

## Claims

1. A method of recording data on an optical data carrier in a form of a rewindable tape having a recordable layer, comprising a step of applying data symbols to the recordable layer in a process of creating voxels with a locally changed refractive index including subjecting the recordable layer to electromagnetic radiation pulses from a pulsed source of focused radiation, directed to the tape as it is being rewound, **characterized in that**
in the step of applying
the tape **(100, 600, 800, 900, 1000)** being used
is transparent along its thickness to electromagnetic radiation having a wavelength of 2000 nm or lower,
has a recordable layer made of a material comprising glass, and
the recordable layer has
an aspect ratio of width **(W)** to thickness **(H)** greater than 320, the thickness **(H)** greater than 1 µm and lower than 20 µm the width **(W)** greater than 7 mm and lower than 18 mm, and a length **(L)** greater than 100 m,
wherein the recordable layer is also a substrate layer,
and further in the step of applying
there is used a beam **(333, 633, 833, 933, 1033, 1133)** of the pulsed electromagnetic radiation having:
a pulse duration of less than 1 ps and
a wavelength of less than or equal to 2000 nm,
said radiation being focused within the volume of the recordable layer of the tape **(100, 600, 800, 900, 1000),** in at least one voxel **(110),** located entirely below the surface of the recordable layer, having a size less than or equal to 1 µm, wherein the said focused radiation reaches the peak intensity greater than or equal to 29 MW/cm², for obtaining a local change in the refractive index of the material of the recordable layer,
wherein the beam **(333, 633, 833, 933, 1033, 1133)** of electromagnetic radiation is directed in successive pulses into the tape **(100, 600, 800, 900, 1000)** being rewound to obtain at least a two-dimensional pattern of voxels **(110).**

2. The method according to claim 1, wherein the tape used **(100, 600, 800, 900, 1000)** has thickness **(H)** ranging from 1 µm to 8 µm.

3. The method according to claim 1, wherein the tape used **(100, 600, 800, 900, 1000)** has a length ranging from 500 m to 1500 m.

4. The method according to any one of claims from 1 to 3, wherein the beam of pulsed electromagnetic radiation used **(333, 633, 833, 1033)** is a Gaussian beam and has a beam quality parameter M² of less than or equal to 1.3.

5. The method according to any one of claims from 1 to 3, wherein the beam of pulsed electromagnetic radiation used **(1133)** is a radially, azimuthally or spirally polarized beam.

6. The method according to any one of claims from 1 to 5, wherein the beam of pulsed electromagnetic radiation **(333, 633, 833, 933)** is focused in a voxel area **(110)** of 0.5 µm or less in size.

7. The method according to any one of claims from 1 to 6, wherein the intensity of the beam of pulsed electromagnetic radiation **(333, 633, 833)** is tuned to provide multiple levels of change of refractive index.

8. The method according to any one of claims from 1 to 7, wherein the phase front of the beam of pulsed electromagnetic radiation **(833)** is shaped using a spatial modulator **(890)** to record many voxels **(110)** simultaneously.

9. An optical data carrier comprising a recordable layer encoded with symbols, **characterized in that**
it is a tape **(100, 600, 800, 900, 1000)** with a recordable layer made of a material containing glass,
the recordable layer is also a substrate layer and the recordable layer has
an aspect ratio of width **(W)** to thickness **(H)** larger than 320, the thickness **(H)** greater than 1 µm and lower than 20 µm the width **(W)** greater than 7 mm and lower than 18 mm, and a length **(L)** greater than 100 m,
wherein the symbols are encoded in voxels **(110)** having a size of 1 µm or less, wherein the voxels **(110)** are located in the volume of the recordable layer entirely below its surface, the voxels **(110)** being represented as change in refractive index in solid glass.

10. The optical data carrier according to claim 9, wherein the recordable layer is made of a material containing boron-silica glass.

11. The optical data carrier according to claim 10, wherein it is coated with a damp-proof layer.

12. The optical data carrier according to claim 9 or 10 or 11, wherein the recordable layer has thickness **(H)** ranging from 1 µm to 8 µm.

13. The optical data carrier according to claim 12, wherein the recordable layer has thickness **(H)** ranging from 1 µm to 4 µm.

14. The optical data carrier according to any of claim 9-13, wherein the change in refractive index within voxels has 16 intensity levels.

15. The optical data carrier according to any of claim 9-14, wherein the change in refractive index within voxels is birefringent.
